# EUROPEAN PATENT APPLICATION

(11) **EP 3 112 651 A1**
(43) Date of publication of application: **04.01.2017**
(21) Application number: 15754724.1
(22) Date of filing: 23.02.2015
(51) Int. Cl.: F02M 26/00, B01D 45/08

(54) **DEMISTER UNIT AND EGR SYSTEM PROVIDED WITH SAME**

(30) Priority: 28.02.2014 JP 2014039900
(71) Applicant: Mitsubishi Heavy Industries, Ltd., Tokyo 108-8215 (JP)
(72) Inventor: UEDA, Takashi, Nagasaki-shi Nagasaki 850-8610 (JP); HIRAOKA, Naohiro, Nagasaki-shi Nagasaki 850-8610 (JP); TANAKA, Shigeki, Nagasaki-shi Nagasaki 850-8610 (JP); OBA, Hiromichi, Nagasaki-shi Nagasaki 850-8610 (JP)
(74) Representative: Hoffmann Eitle
(86) International application number: PCT/JP2015/054961
(87) International publication number: WO 2015/129604

(57) **Abstract**

A demister unit (1) according to the present invention is provided with: a casing (21) forming an internal space; a baffle plate (25) arranged so as to be opposite a demister unit inlet (28) channeling fluid into the internal space, the baffle plate (25) forming an upstream flow channel (32) that bends in the internal space; and a demister body (24) that separates the upstream flow channel (32) and a downstream flow channel (33) which is downstream of the upstream flow channel (32). Such the demister unit (1) can be formed more compactly than other demister units which use expanding pipes to equalize the flow velocity at which fluid passes through a demister body.

## Description

### Technical Field

The present invention relates to demister units to remove mist contained in exhaust gas and EGR systems with same.

### Background Art

Demisters and mist eliminators are used to remove mist contained in exhaust gas from boilers (see Patent Document 1). Patent Document 1 describes a demister provided downstream of a discharge pipe of a dedusting tower and a scrubber of an exhaust gas desulfurization apparatus.

Additionally, exhaust gas recirculation (EGR) systems are known that reduce nitrogen oxide emissions by taking a portion of the exhaust gas of an internal combustion engine and recycling it back to the intake side of the internal combustion engine. Demisters are also used in EGR systems and, in such systems, mist is removed from the exhaust gas to be recycled and then sent back to the intake side of the internal combustion engine.

### Citation List

### Patent Documents

Patent Document 1: Japanese Unexamined Patent Application Publication No. H8-131764A

### Summary of Invention

### Technical Problem

However, as described in Patent Document 1, conventional demisters (also called "mist eliminators") are generally provided along the piping or within the structure of an exhaust gas desulfurization apparatus, or the like. There are cases that the amount of mist in the atmosphere is large at this installation location, and exceeding the removal capacity of the demister. Accordingly, the provision of multi-stage demisters and the like has been considered, but there is a problem in that the device will become larger.

Particularly, for EGR systems for marine vessels there is a need to install the demister near the internal combustion engine and, therefore, the demister must be compact.

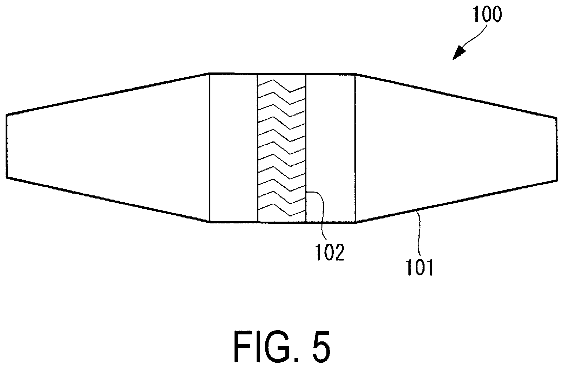

FIG. 5 illustrates a demister unit 100 as a comparative example. The demister unit 100 is provided with an expanding pipe 101 positioned on the exhaust gas upstream side, and a demister main body 102 for removing mist from exhaust gas. The expanding pipe 101 is formed such that the cross-sectional area of the flow channel expands as it proceeds downstream in the flow channel. The demister main body 102 is disposed across the entire cross-section of the flow channel having the cross-sectional area thereof expanded by the expanding pipe 101.

The expanding pipe 101 uniformly reduces the speed of the exhaust gas so as to prevent flow velocity distribution of the exhaust gas as much as possible, and is used to adjust the flow velocity of the exhaust gas. This is because the appropriate flow velocity for removing mist is determined by the demister main body 102. As described above, due to the fact that the expanding pipe 102 is needed to obtain the appropriate flow velocity, there is a problem in that the overall size of the demister unit 100 must unavoidably become larger in the flow direction of the exhaust gas.

In light of the foregoing, an object of the present invention is to provide a compactly formed demister unit and an EGR system provided with the same.

### Solution to Problem

A demister unit according to a first aspect of the present invention is provided with a casing; a baffle plate, disposed within the casing so as to be opposite an inlet allowing inflow of a fluid into an internal space of the casing, and forming an upstream flow channel bending in the internal space; and a demister main body, separating the upstream flow channel and a downstream flow channel that is downstream of the upstream flow channel in the internal space, and removing mist from the fluid flowing therethrough.

In such a demister unit, the baffle plate is disposed so as to be opposite the fluid flowing into the internal space from the inlet. Therefore, the fluid will collide with the baffle plate and expand and flow along the baffle plate and, as a result, the fluid can be slowed down and the flow velocity can be equalized. Additionally, when the fluid collides with the baffle plate, mist contained in the fluid will adhere to the baffle plate and, thus, primary removal of rough mist can performed.

Additionally, due to the upstream flow channel being bent by the baffle plate, the flow velocity of the fluid can be equalized and the centrifugal forces caused when the fluid flows around the bend can be used to further remove mist.

The fluid that has been decelerated and for which the flow velocity has been equalized by the baffle plate is sent to the demister main body, and final removing of the remaining mist is performed in the demister main body.

Such a demister unit can be formed more compactly than other demister units such as that illustrated in FIG. 5 which use expanding pipes to equalize the velocity at which the fluid passes through the demister body, because the expanding pipes which require the provision of a straight predetermined distance in the flow direction of the fluid can be omitted.

The baffle plate and the demister main body of the demister unit according to the first aspect described above may be provided in an upper region of the casing, and a bottom edge of the baffle plate may be disposed downward in a vertical direction of a bottom edge of the demister main body.

By disposing the bottom edge of the baffle plate downward in the vertical direction of the bottom edge of the demister main body, the fluid that has bent at the bottom edge of the baffle plate can be sent back upwards and directed to the demister main body. Thus, the flow velocity at which the fluid flows into the demister main body can be further equalized and mist can be appropriately removed at the demister main body.

The demister unit according to the first aspect descried above may further be provided with a demister support plate supporting the demister main body from below the casing, and separating the upstream flow channel and a region disposed downward of the downstream flow channel of the upstream flow channel; and a drop-down plate protruding from the demister main body downward in the vertical direction of the demister support plate.

By providing the drop-down plate that protrudes downward of the demister support plate, the fluid flowing along the bottom surface of the demister support plate will collide with the drop-down plate. The fluid that collides with the drop-down plate will flow over and around the periphery of the drop-down plate and then flow into the demister main body. As described above, due to the presence of the drop-down plate, the fluid can be prevented from shortcutting the edge of the demister support plate and flowing into the demister main body and the flow velocity distribution of the fluid flowing into the demister main body can be uniformly maintained.

The demister unit according to the first aspect may further be provided with a porous plate separating a retention space where the mist is retained from the upstream flow channel, within the internal space.

Due to the porous plate being provided so as to separate the retention space where the mist is retained and the upstream flow channel, the fluid flowing through the upstream flow channel can be prevented from directly contacting the liquid surface of the retention space. Thus, recombination of the liquid retained in the retention space with the fluid flowing through the upstream flow channel can be reduced.

The EGR system according to a second aspect of the present invention is provided with a scrubber to which a portion of exhaust gas of an engine is sent, and any one of the demister units described above to which the exhaust gas is sent from the scrubber; the exhaust gas sent from the demister unit being sent to the engine.

Because the demister unit is formed compactly, the EGR system can be formed compactly and can be installed near the engine.

### Advantageous Effects of Invention

The demister unit and the EGR system according to the present invention can be formed compactly.

### Brief Description of Drawings

FIG. 1 is a perspective view illustrating a diesel engine provided with an EGR system to which a demister according to an embodiment of the present invention is applied.
FIG. 2 is a schematic drawing illustrating a diesel engine provided with the EGR system of FIG. 1.
FIG. 3 is a side cross-sectional view illustrating the demister according to an embodiment of the present invention.
FIG. 4 is a vertical cross-sectional view illustrating a planar view of the demister of FIG. 3.
FIG. 5 is a side cross-sectional view illustrating a comparative example.

### Description of Embodiments

A description of an embodiment of a demister unit is given below while referencing the drawings.

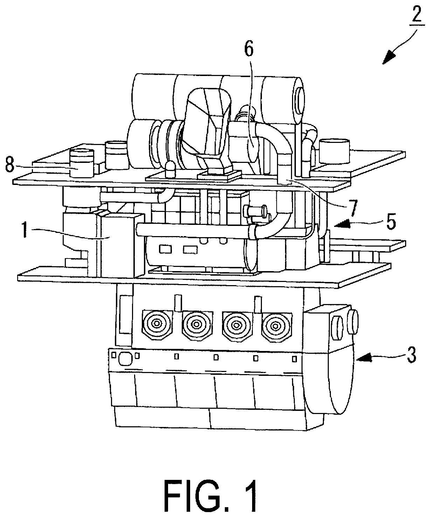

As illustrated in FIG. 1, a demister unit 1 is used in an EGR system 2 provided in a 2-cycle large diesel engine (hereinafter referred to simply as "engine") used, for example, for the propulsion of a marine vessel. The engine is provided with an engine 3, a turbocharger 5, and the EGR system 2.

Using the combustion air produced by the turbocharger 5, the engine 3 causes fuel to combust, thereby generating motive power and expelling exhaust gas. The exhaust gas is expelled into the environment via a funnel.

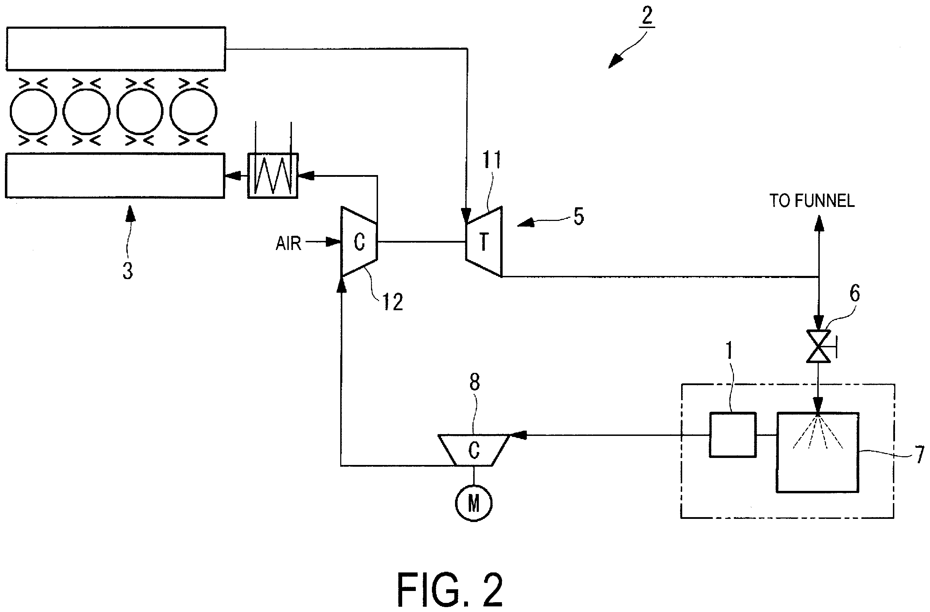

As illustrated in FIG. 2, the turbocharger 5 is disposed between the engine 3 and an EGR valve 6 and is provided with an axial turbine 11 and a radial compressor 12. Using the exhaust gas expelled from the engine 3, the axial turbine 11 generates rotative power and expels exhaust gas. Using the rotative power generated by the axial turbine 11, the radial compressor 12 compresses outside air and/or exhaust gas fed from an EGR blower 8, thereby producing combustion air.

The EGR system 2 is provided with the EGR valve 6, a scrubber 7, the demister unit 1, and the EGR blower 8. The EGR valve 6 is disposed upward of the engine 3 and feeds to the scrubber 7 a portion of the exhaust gas flowing from the turbocharger 5 to the funnel. The scrubber 7 and the EGR blower 8 are disposed between the engine 3 and the EGR valve 6.

The scrubber 7 is equipped Venturi tubes, and a high velocity flow of the exhaust gas fed from the EGR valve 6 is generated by the Venturi tubes. The scrubber 7 disperses a cleaning fluid on the high velocity flow of the exhaust gas and, thus produces a mist of the cleaning fluid. At this time, dust included in the exhaust gas comes into contact with the mist and the dust is removed from the exhaust gas.

The demister unit 1 produces mist-removed exhaust gas by removing the mist from the dust-removed exhaust gas from which the scrubber 7 removed the dust.

The EGR blower 8 increases the pressure of the mist-removed exhaust gas from which the mist was removed by the demister unit 1 and feeds it to the radial compressor 12 of the turbocharger 5.

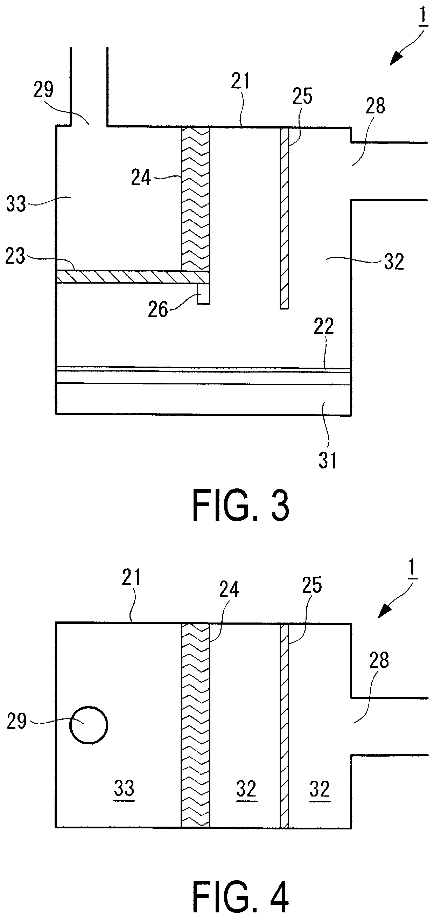

FIG. 3 illustrates the demister unit 1. The demister unit 1 is provided with a casing 21, a porous plate 22, a demister support plate 23, a demister main body 24, a baffle plate 25, and a drop-down plate 26.

The casing 21 is a container forming an internal space therein. A retention space 31, an upstream flow channel 32, and a downstream flow channel 33 are formed in the internal space of the casing 21. The retention space 31 is disposed in the lower portion of the internal space of the casing 21. The downstream flow channel 33 is disposed in a part of the upper portion of the internal space of the casing 21. The upstream flow channel 32 is disposed between the retention space 31 and the downstream flow channel 33 so as not to come in contact with the retention space 31 and the downstream flow channel 33, and is disposed upward of the retention space 31.

A demister unit inlet 28 and a demister unit outlet 29 are further formed in the casing 21. The demister unit inlet 28 is formed in a wall surface facing the upstream flow channel 32 of the inner wall surface formed by the casing 21 and sends the dust-removed exhaust gas from which the scrubber 7 removed the dust to the upstream flow channel 32. The demister unit outlet 29 is formed in a wall surface (a ceiling in the present embodiment) facing the downstream flow channel 33 of the inner wall surface formed by the casing 21 and connects the downstream flow channel 33 to the EGR blower 8.

The porous plate 22 is formed from a flat plate in which a plurality of holes through which fluid can pass is formed. The porous plate 22 is disposed in the internal space of the casing 21 along the horizontal plane and separates the retention space 31 and the upstream flow channel 32. The porous plate 22 may, for example, be a plate with a mesh-like shape.

The demister support plate 23 is formed from a plate that does not allow the passage of fluids. The demister support plate 23 is roughly disposed along the horizontal plane in the lower portion of the downstream flow channel 33 in the internal space of the casing 21 and separates the upstream flow channel 32 and the downstream flow channel 33. The bottom of the demister support plate 23 is formed so as to be downward in the vertical direction of the lower edge of the baffle plate 25.

In the demister main body 24, a plurality of flow channels are formed that bend multiple times so as to allow the flow of the fluid, and the overall shape of the demister main body 24 is configured to be a flat plate-like body such as that illustrated in FIG. 3. The demister main body 24 is roughly disposed along the vertical plane in the internal space of the casing 21 and separates the upstream flow channel 32 and the downstream flow channel 33. That is, the downstream flow channel 33 is surrounded by the inner wall surface formed by the casing 21, the demister support plate 23, and the demister main body 24; and is separated from the upstream flow channel 32 by the demister support plate 23 and the demister main body 24. The demister main body 24 removes mist from the fluid passing through the demister main body 24. The lower portion of the demister main body 24 is supported by the demister support plate 23.

The baffle plate 25 is formed from a plate that does not allow the passage of fluids. The baffle plate 25 is disposed between the demister main body 24 in the internal space of the casing 21 and the demister unit inlet 28, and is disposed along the vertical plane parallel to the vertical plane that the demister main body 24 follows. Furthermore, as illustrated in FIG. 4, the baffle plate 25 is disposed so as to oppose the demister unit inlet 28, that is, the baffle plate 25 is disposed so that the fluid flowing into the upstream flow channel 32 from the demister unit inlet 28 will collide with the baffle plate 25. Here, the baffle plate 25 is disposed such that the distance from the demister unit inlet 28 to the baffle plate 25 is less than or equal to the diameter of the demister unit inlet 28.

Furthermore, as illustrated in FIG. 3, the baffle plate 25 is provided in an upper region of the casing 21. More specifically, the baffle plate 25 is fixed to the ceiling of the upper side of the inner wall surface formed by the casing 21. Additionally, both side edges of the baffle plate 25 are fixed to both side walls of the casing 21. The baffle plate 25 is formed so that the bottom edge of the baffle plate 25 is disposed downward in the vertical direction of the bottom edge of the demister main body 24. The flow channel area below the baffle plate 25 is formed larger than the flow channel area prior to entering this lower region so that the exhaust gas does not re-accelerate upon passing below the baffle plate 25. As described above, the baffle plate 25 bends the upstream flow channel 32 so that the fluid entering from the demister unit inlet 28 flows downward and then the downward flowing fluid flows back upward.

The drop-down plate 26 is formed from a plate that does not allow the passage of fluids. The drop-down plate 26 is disposed so as to be along the vertical plane that the demister main body 24 follows, that is, so as to be along a plane extending below the upstream plane of the demister main body 24, and an upper edge thereof is joined to the demister support plate 23. Furthermore, the drop-down plate 26 is formed so that the bottom edge is disposed equivalent or upward in the vertical direction to a position in the vertical direction of the bottom edge of the baffle plate 25. In other words, the drop-down plate 26 is formed so as to guide the fluid, progressing toward the demister main body 24 from the region on the lower side of the demister support plate 23 in the upstream flow channel 32 (toward the right side of FIG. 3), downward.

Next, the effects of the EGR system 2 provided with the demister unit 1 with the configuration described above will the explained.

In the EGR system 2, using the combustion air produced by the turbocharger 5, the engine 3 causes fuel to combust, thereby generating motive power and expelling exhaust gas. Using the exhaust gas expelled from the engine 3, the turbocharger 5 produces combustion air by increasing the pressure of the exhaust gas fed from the EGR blower 8, and expels exhaust gas. The EGR valve 6 feeds a predetermined flow volume of exhaust gas, of the exhaust gas expelled from the turbocharger 5, to the scrubber 7.

The scrubber 7 produces dust-removed exhaust gas by removing the dust from the exhaust gas fed from the EGR valve 6. The demister unit 1 produces mist-removed exhaust gas by removing the mist from the dust-removed exhaust gas produced by the scrubber 7. The EGR blower 8 increases the pressure of the mist-removed exhaust gas produced by the demister unit 1 and feeds it to the turbocharger 5.

The exhaust gas fed from the scrubber 7 to the demister unit 1 is sent from the demister unit inlet 28 to the upstream flow channel 32. The exhaust gas sent from the demister unit inlet 28 collides with the baffle plate 25 and flows, expanding along the upstream surface of the baffle plate 25. At this time, relatively large mist including in the exhaust gas adheres to the baffle plate 25 and is removed. The moisture drops adhered to the baffle plate 25 flow downward and drip into the retention space 31.

The exhaust gas that collides with the baffle plate 25 and flows upward along the upstream surface of the baffle plate 25 changes direction after colliding with the ceiling of the casing 21, and/or the exhaust gas flowing in the left-right width direction along the upstream surface of the baffle plate 25 changes direction after colliding with each side surface of the casing 21, and ultimately all of the exhaust gas flows downward. Thus, the exhaust gas directed to flow downward by the baffle plate 25 turns back so as to divert around the bottom edge of the baffle plate 25 and flows upward toward the demister main body 24.

A portion of the exhaust gas flowing past the bottom edge of the baffle plate 25 flows to the region downward of the demister support plate 23 in the upstream flow channel 32. The exhaust gas that has flowed into the region downward of the demister support plate 23 collides with the drop-down plate 26 and then is diverted around the bottom edge thereof and flows upward toward the demister main body 24. Thus, due to the exhaust gas flowing through the bending upstream flow channel 32 and the centrifugal force generated upon being diverted around the bottom edge of the drop-down plate 26, the mist included in the exhaust gas is further separated, passes through the holes in the porous plate 22, and is retained in the retention space 31. Here, the porous plate 22 prevents direct contact of the exhaust gas flowing through the upstream flow channel 32 and the liquid surface of the retention space 31, and prevents the reincorporation of the mist retained in the retention space 31.

The exhaust gas flowing through the upstream flow channel 32 passes through the demister main body 24 and is fed to the downstream flow channel 33. Due to the passing of the exhaust gas through the demister main body 24, the mist included in the exhaust gas is agglutinated and falls, passes through the holes in the porous plate 22, and is retained in the retention space 31. The exhaust gas having the mist removed by the demister main body 24 flows through the downstream flow channel 33 and is fed to the EGR blower 8 via the demister unit outlet 29.

As described above, the following benefits are provided through the EGR system provided with the demister unit 1 according to the present embodiment.

The baffle plate 25 is disposed so as to be opposite the exhaust gas flowing into the internal space from the demister unit inlet 28. Therefore, the exhaust gas will collide with the baffle plate 25 and expand and flow along the baffle plate 25 and, as a result, the exhaust gas can be slowed down and the flow velocity can be equalized. Additionally, when the exhaust gas collides with the baffle plate 25, mist contained in the exhaust gas will adhere to the baffle plate 25 and, thus, primary removal of rough mist can be performed.

Additionally, due to the upstream flow channel 32 being bent by the baffle plate 25, the flow velocity of the exhaust gas can be equalized and the centrifugal forces caused when the exhaust gas flows around the bend can be used to further remove mist.

Compared to the demister unit 100 having the expanding pipe 101 illustrated in FIG. 5 as a comparative example, due to the flow channel that the exhaust gas flows through being bent by the baffle plate 25, the demister unit 1 is shorter in length in the longitudinal direction and can be formed more compactly.

By disposing the bottom edge of the baffle plate 25 downward in the vertical direction of the bottom edge of the demister main body 24, the exhaust gas that has bent at the bottom edge of the baffle plate 25 can be sent back upwards and directed to the demister main body 24. Thus, the flow velocity at which the exhaust gas flows into the demister main body 24 can be further equalized and mist can be appropriately removed at the demister main body.

By providing the drop-down plate 26 that protrudes downward of the demister support plate 23, the exhaust gas flowing along the bottom surface of the demister support plate 23 will collide with the drop-down plate 26. The exhaust gas that collides with the drop-down plate 26 will flow over and around the periphery of the drop-down plate 26 and then flow into the demister main body 24. As described above, due to the presence of the drop-down plate 26, the exhaust gas can be prevented from shortcutting the edge of the demister support plate 23 and flowing into the demister main body 24 and the flow velocity distribution of the fluid flowing into the demister main body 24 can be uniformly maintained.

Due to the porous plate 22 being provided so as to separate the retention space 31 where the mist is retained and the upstream flow channel 32, the exhaust gas flowing through the upstream flow channel 32 can be prevented from directly contacting the liquid surface of the retention space 31. Thus, recombination of the liquid retained in the retention space 31 with the fluid flowing through the upstream flow channel can be reduced.

Because the demister unit 1 can be formed compactly, the EGR system 2 can be formed compactly and can be installed near the engine 3.

Note that in the present embodiments, an example was given in which the demister unit 1 was applied to the EGR system 2, but the demister unit of the present invention is not limited thereto and may, for example, be applied to any equipment used in exhaust gas treatment such as a boiler or the like.

The baffle plate 25 can be formed such that a bottom edge thereof is disposed upward of the bottom edge of the demister main body 24 in cases where the demister main body 24 can sufficiently and appropriately remove the mist from the exhaust gas. Even in cases where the bottom edge of the baffle plate 25 is disposed upward of the bottom edge of the demister main body 24, the demister unit 1 can be formed compactly due to the bending of the upstream flow channel 32 by the baffle plate 25.

Additionally, in the present embodiment, a configuration was described in which the baffle plate 25 was provided along the vertical direction, but the bottom edge of the baffle plate 25 may be inclined at a predetermined angle to the downstream side (the demister main body 24 side).

In cases where the demister main body 24 can sufficiently and appropriately remove the mist from the exhaust gas, the drop-down plate 26 can be omitted. Even in cases where the drop-down plate 26 is omitted, the demister unit 1 can be formed compactly due to the bending of the upstream flow channel 32 by the baffle plate 25.

Additionally, the porous plate 22 can be omitted when the exhaust gas flowing through the upstream flow channel 32 does not reincorporate the mist retained in the retention space 31. Even in cases where the porous plate 22 is omitted, the demister unit 1 can be formed compactly due to the bending of the upstream flow channel 32 by the baffle plate 25.

### Reference Signs List

1 Demister unit
2 EGR system
7 Scrubber
21 Casing
22 Porous plate
23 Demister support plate
24 Demister main body
25 Baffle plate
26 Drop-down plate
28 Demister unit inlet
29 Demister unit outlet
31 Retention space
32 Upstream flow channel
33 Downstream flow channel

## Claims

1. A demister unit comprising:
a casing;
a baffle plate, disposed within the casing so as to be opposite an inlet allowing inflow of a fluid into an internal space of the casing, and forming an upstream flow channel bending in the internal space; and
a demister main body, separating the upstream flow channel and a downstream flow channel that is downstream of the upstream flow channel in the internal space, and removing mist from the fluid flowing therethrough.

2. The demister unit according to claim 1, wherein:
the baffle plate and the demister main body are disposed in an upper region of the casing; and
a bottom edge of the baffle plate is disposed downward in a vertical direction of a bottom edge of the demister main body.

3. The demister unit according to claim 2, further comprising:
a demister support plate supporting the demister main body from below the casing, and separating the upstream flow channel and a region disposed downward of the downstream flow channel of the upstream flow channel; and
a drop-down plate protruding from the demister main body downward in the vertical direction of the demister support plate.

4. The demister unit according to any one of claims 1 to 3, further comprising within the internal space a porous plate separating a retention space where the mist is retained from the upstream flow channel.

5. An EGR system comprising:
a scrubber to which a portion of exhaust gas of an engine is sent; and
a demister unit described in any one of claims 1 to 4 to which the exhaust gas is sent from the scrubber;
the exhaust gas sent from the demister unit being sent to the engine.

## Amended claims

### Amended claims under Art. 19.1 PCT

**1.** Amended] A demister unit comprising:
a casing;
a baffle plate, disposed within the casing so as to be opposite an inlet allowing inflow of a fluid into an internal space of the casing, and forming an upstream flow channel bending in the internal space; and
a demister main body, separating the upstream flow channel and a downstream flow channel that is downstream of the upstream flow channel in the internal space, and removing mist from the fluid flowing therethrough;
the baffle plate being fixed to a ceiling of the upper side of an inner wall surface formed by the casing, and both sides of the baffle plate being fixed to both side walls of the inner wall surface of the casing.

**2.** The demister unit according to claim 1, wherein:
the baffle plate and the demister main body are disposed in an upper region of the casing; and
a bottom edge of the baffle plate is disposed downward in a vertical direction of a bottom edge of the demister main body.

**3.** Amended] A demister unit comprising:
a casing;
a baffle plate, disposed within the casing so as to be opposite an inlet allowing inflow of a fluid into an internal space of the casing, and forming an upstream flow channel bending in the internal space; and
a demister main body, separating the upstream flow channel and a downstream flow channel that is downstream of the upstream flow channel in the internal space, and removing mist from the fluid flowing therethrough;
the baffle plate and the demister main body being provided in an upper region of the casing and a bottom edge of the baffle plate being disposed downward in a vertical direction of a bottom edge of the demister main body;
the demister unit further comprising:
a demister support plate supporting the demister main body from below the casing, and separating the downstream flow channel and a region disposed in an lower side of the downstream flow channel in the upstream flow channel; and
a drop-down plate protruding downward in the vertical direction of the demister support plate from the demister main body.

**4.** Amended] A demister unit comprising:
a casing;
a baffle plate, disposed within the casing so as to be opposite an inlet allowing inflow of a fluid into an internal space of the casing, and forming an upstream flow channel bending in the internal space; and
a demister main body, separating the upstream flow channel and a downstream flow channel that is downstream of the upstream flow channel in the internal space, and removing mist from the fluid flowing therethrough;
the demister unit further comprising:
within the internal space, a porous plate separating a retention space where the mist is retained from the upstream flow channel.

**5.** An EGR system comprising:
a scrubber to which a portion of exhaust gas of an engine is sent; and
a demister unit described in any one of claims 1 to 4 to which the exhaust gas is sent from the scrubber;
the exhaust gas sent from the demister unit being sent to the engine.
